# EUROPEAN PATENT APPLICATION

(11) **EP 0 770 961 A2**
(43) Date of publication of application: **02.05.1997**
(21) Application number: 96117031.3
(22) Date of filing: 23.10.1996
(51) Int. Cl.: G06F 13/18

(54) **Memory access system**

(30) Priority: 24.10.1995 JP 274619/95
(71) Applicant: KONICA CORPORATION, Tokyo (JP)
(72) Inventor: Osaki, Hajime, Hachioji-shi, Tokyo (JP)
(74) Representative: Henkel, Feiler, Hänzel & Partner

(57) **Abstract**

An image forming apparatus for forming an image on a sheet, comprises a memory for storing data in predetermined addresses; a plurality of processors; and an access control circuit for providing an access right to get access to the memory for a predetermined number of processors among the plurality of processors in accordance with predetermined order so that only the processor provided with the access right can get access to the memory.

## Description

### BACKGROUND OF THE INVENTION

The present invention relates to a method of accessing to one memory from plural processors, a memory control device which controls sending or receiving of data between one memory and plural processors, a communication device which conducts accessing between one memory and plural processors and an image forming apparatus which forms an image on a recording medium based on image information.

Since it is highly effective to conduct various controls based on data located at one place, to access one memory which is a storage means which stores a prescribed data at a prescribed address such as a random access memory (hereinafter, referred to as RAM) or a read only memory (hereinafter, referred to as ROM) by plural processors (CPU or a circuit capable of sending or receiving data) has been proliferating. It is also convenient to communicate between plural processors through one memory since plural information (data) cannot exist at once so that centralization can be maintained. However, plural processors cannot access the memory concurrently. Ordinarily, only one processor can access the memory. Therefore, conventionally, the main processor (a processor which conducts main sequence control, CPU) managed access from plural processors to the memory so that only one processor accesses to the memory.

When plural processors attempts to access one memory, it is common that the above-mentioned management takes any of the following methods: 1) to give priority to processors which try to access, 2) one processor is allowed access after prohibiting access by the other processor, or 3) one processor accesses after confirming that the other processors are not accessing.

Though, conventionally, the above-mentioned management utilized non-operation time of the operation by the main processor. However, the non-operation time has been reduced in recent processors since increase of speed has been realized. Further, quite many processors access one memory so that the number of access has been increased. If the above-mentioned management is conducted by the main processor, efficiency of the main processor is reduced and the inherent control by the main processor extremely reduced. Therefore, Japanese Patent Publication Open to Public Inspection (hereinafter, referred to as Japanese Patent O.P.I. Publication) No. 66061/1994 disclosed provision of a memory access controller exclusively for controlling the memory for reducing the burden of the main processor.

However, the above-mentioned Japanese Patent O.P.I. Publication No. 66061/1994 only assigned management control of the memory which was conventionally conducted by the main processor to the independent memory access controller. therefore, when the processor tries to access the memory, the memory access controller checks whether the other processors tries to access the memory and allow aforesaid processor to access the memory after receiving "access O.K." signal sent from the processor for communication.

For the above-mentioned access the memory, it is necessary to check accessing condition to the memory. Therefore, control of each processor becomes complicated. In addition, each processor generates waiting time so that processing efficiency of the processor is reduced. Further, according to aforesaid access control, access response time to the memory cannot maintain in several ms order.

For example, in an image forming apparatus such as a copying machine and a printer, specifically in an electrophotographic type image forming apparatus, sequence control for the entire image forming apparatus is conducted by the main processor. To the contrary, control for conveying a recording medium, control of the operation panel and option system control such as a sorter or a weekly timer are conducted by each of the sub-processors. The above-mentioned processors (the main processor and plural sub-processors) share one memory for increasing efficiency of the memory. Specifically, in a recent digital image forming apparatus, a short access response time is requested. The scale of this request is different depending upon each processor. For example, an access response time requested for the main processor is in some tens ns unit, while the access response time requested for the main processor is in some hundred ms unit. Though there is difference in the access response time requested as described above, Japanese Patent O.P.I. Publication No. 66061/1994 conducts the same management to all of the processors. Further, the access response time is set to be in some tens ms order so that delaying is given to the sequence control of the main processor and thereby favorable image cannot be formed.

On the other hand, though it is extremely expensive, a dual port RAM wherein two processors can access one memory has recently been developed. However, even if the above-mentioned dual port RAM is used, as described above, according to conventional technology, it is necessary to check accessing. Therefore, the access response time is reduced and control becomes complicated.

### SUMMARY OF THE INVENTION

Accordingly, the present invention was made viewing the above-mentioned situation, The first objective of the present invention is to increase the access response time and concurrently with this to simplify the control of each processor when plural processors access one memory. The second objective is not to give waiting time to each processor as much as possible.

The above-mentioned first objective is attained by a method of accessing to one memory from plural processor, wherein an access right which enables to access the memory is provided to specific number of processors among plural of the above-mentioned processors regardless that aforesaid processor request access the memory or not and only specific number of processors among plural of the above-mentioned processors can access the above-mentioned memory (the first invention). Namely, since provision of the access right is given to a processor regardless that it request accessing or not, it is not necessary to check whether the other processors are accessing prior to accessing by aforesaid processor. Accordingly, control of each processor can be simplified.

In the first invention, by providing the access right according to a prescribed order, accessing to the memory can be conducted according to the priority order of each processor. In addition, in the first invention, by providing the access right to plural processors cyclically, each of the processors can access the memory at least once during one circulation (rotation). In addition, by providing the access right at a prescribed interval, access control is facilitated. When plural processors request accessing to the memory, they output an access requesting signal. By maintaining aforesaid access requesting signal until the accesses (by the processors outputting the access requesting signals) are completed, that the processor cannot access can be prevented. When the processors provided with the access right are not requesting accessing, the access response time by the other processors can be improved by shortening the provision time of the access right.

The above-mentioned second objective is attained by a method of accessing from plural processors to one memory, wherein, when a processor having higher priority tries to access the above-mentioned memory, if a processor having lower priority compared with the above-mentioned processor having higher priority is accessing to the above-mentioned memory, accessing from the above-mentioned processor having lower priority is interrupted and the processor having higher priority accesses to the above-mentioned memory (the second invention). Namely, the processor having higher priority can access the memory without waiting it as much as possible even if the other processor is accessing.

In addition, in the second invention, the interrupted processor re-access the memory after the processor having higher priority finishes accessing to the memory. Therefore, it is meritable in terms of protection of data in the memory and data reliability. When access the memory from the processor having lower priority is interrupted, the processor having lower priority can surely access the memory by causing it to maintain the interrupted access request.

The above-mentioned first and second objective are methods of accessing to one memory from the main processor and plural sub-processors, wherein the access right capable of accessing to the above-mentioned memory is provided to specific number of sub-processors among plural of the above-mentioned sub-processors regardless that whether aforesaid sub-processors request accessing to the memory, only the specific number of sub-processors to which the above-mentioned access right is provided among plural of the above-mentioned sub-processor can access the above-mentioned memory and concurrently with this, if the above-mentioned main processor tries to access the above-mentioned memory, the above-mentioned main processor accesses to the above-mentioned memory while access by the above-mentioned sub-processor is interrupted.

"Memory" referred to as in the present invention is a storing means such as a random access memory (hereinafter, referred to as RAM) and a read only memory (hereinafter, referred to as ROM) which stores a prescribed data in a prescribed address. Specifically, the present invention is preferable to be applicable to the RAM which can read and write data. In addition, though the number wherein data cannot be read or written concurrently is not limited (the dual port RAM). However, if the number is one, the cost is inexpensive and control can be simplified.

"Processor" in the present invention is a circuit capable of sending and receiving data by accessing to the memory. The processor is categorized into a main processor and a sub-processor. In this case, the main processor has higher priority compared with the other processors, and is necessary to access the memory with high access and response time (in other words, the processor having higher priority, CPU is preferable). It is preferable that the main processor conducts main sequence control. The number of the main processor is preferably one. However, plural main processor may be allowed. The sub-processor has lower priority than the main processor. It is not necessary to access the memory with high access and response time (it may also referred to as the processor having lower priority). Plural aforesaid sub-processors may be provided and priority may be provided among them. The above-mentioned processors may be exclusive use for reading or writing or combiningly used for reading and writing.

"Access" referred to as in the present invention is to read or write to the memory. "Access execution" and "to execute accessing" may also be used.

"Access right" referred to as in the present invention is a right of each processor to access the memory. It is provided to each processor, regardless that each processor requests accessing or not to the memory. In principle, only when the above-mentioned access right is provided, the processor can access the memory. More practically, provision of the access right means to constantly monitor the change of the accessing request (change of the requesting signal, change of the address signal or change of the data signal may be included therein). When there is a change, its access can be executed. Further in detail, monitoring of the change of the above-mentioned accessing request is conducted only for the specific number of the processor. With a prescribed time interval, the next processor is monitored. This monitoring may be continued cyclically (rotationally).

"Specific number" referred to as in the present invention means the number which the memory inherently has for concurrent accessible or less (the number which can be accessed to the memory simultaneously. For example, in the case of the dual port RAM, it is two. In the case of the single port RAM, it is one).

"To provide the access right to the specific number of processors" is to provide the access right to processors such as a processor for reading or a processor for writing. When the processor is a reading and writing combination processor, it is to provide the access right to a circuit for reading or a circuit for writing among a reading and writing combination processor. Incidentally, if the processor is a reading and writing combination processor, requested reading access or writing access may be conducted after providing the access right to aforesaid processor and, thereafter, checking whether there is a reading request, writing request or both request or there is neither request.

"Request accessing" referred to as in the present invention means that the processor tries to access the memory. More practically, the processor is outputting an access requesting signal. Incidentally, it is not limited to the access requesting signal but access request may be conduct by changing the address signal or change of the data signal.

### BRIEF DESCRIPTION OF THE DRAWINGS

Fig. 1 is a block diagram showing the present invention schematically.

Fig. 2 is a drawing for showing a communication device in which the present invention is applied.

Fig. 3 is a drawing showing inside of the RAM module.

Fig. 4 is a flow chart showing provision of the access right to the sub-processor.

Fig. 5 is a timing chart showing interruption by the main processor.

Fig. 6 is a cross sectional block diagram of a copying apparatus.

Fig. 7 is a drawing showing one example of plural processors and their conection.

Fig. 8 is a block diagram showing provision of the access right during an image is formed schematically.

Fig. 9 is a block diagram showing provision of the access right during an image is not formed schematically.

### DETAILED DESCRIPTION OF THE PREFERRED EMBODIMENT

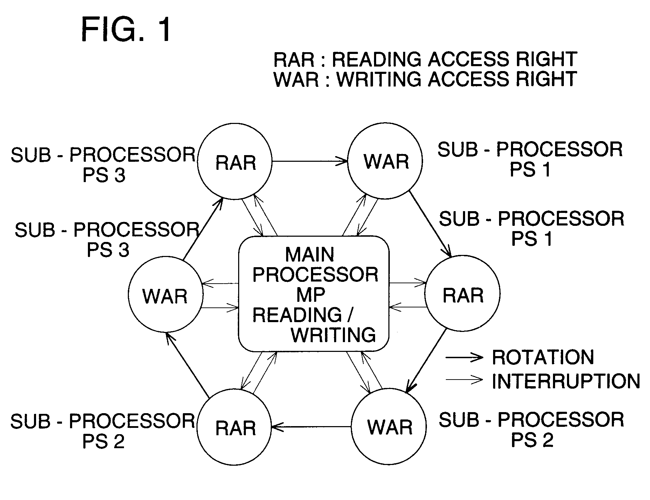

The outline of the present invention will be explained referring to Fig. 1. Fig. 1 represents a typical block diagram, and shows the third invention which combines the first invention and the second invention. What is explained hereinafter is a memory to which the number capable of accessing concurrently is only one (the specific number is 1). In other words, the access right is given to one processor among plural processors.

In Fig. 1, sub-processors SP1 - SP3 which are located cyclically around the main processor MP and the main processor located at the center are connected to the memory (not illustrated) and is capable of accessing the memory. Fig. 1 provides three sub-processors. However, this number is not limited to three. In addition, in Fig. 1, sub-processors SP1 - SP3 are reading/writing combined-use processors, provided that, for typical purposes, reading use and writing use are illustrated separately. However, not limiting thereto, a sub-processor exclusively for reading use or writing use may be used. Sub-processors SP1 - SP3 are provided with access rights which is a right to access by the controller (not illustrated) regardless that sub-processors SP1 - SP3 request accessing to the memory or not. Only sub-processors SP1 - SP3 which have been provided with the access right can access the memory (the first invention).

This access right is provided by the controller in a prescribed order and frequency at a prescribed regularity. In Fig. 1, the access right is provided cyclically (in such a manner that it circulates (rotates) all sub-processors SP1 - SP3 at a prescribed interval). When a sub-processor which is not provided with an access right tries to access the memory (when aforesaid sub-processor outputs the access request), it cannot access the memory until aforesaid sub-processor is provided with the access right. However, each sub-processor is provided with an access right at least once every rotation. Therefore, aforesaid sub-processor can access the memory within each rotation.

For example, first, the access right for writing is provided to sub-processors SP1. Next, the access right for reading is provided to sub-processors SP1. Next, the access right for writing is provided to sub-processors SP2. ---Finally, the access right for reading is provided to sub-processors SP3. Since, the access right for reading is provided to sub-processors SP3, then, the access right for writing is again provided to sub-processors SP1. Then, the above-mentioned procedure is repeated. Suppose that sub-processor SP2 is outputting the reading request signal for reading data of the memory, aforesaid sub-processor SP2 can access the memory so that it can read data from the memory, only while the reading access right is provided to sub-processor SP2. In this occasion, since the access right is not provided to the other sub-processor SP1 and SP3, the other sub-processors SP1 and SP3 cannot access the memory. In addition, even when the access right is provided to a sub-processor which does not request access, aforesaid sub-processor does not access the memory.

As described above, the controller provides the access right to only one sub-processor (in detail, reading or writing of one sub-processor) so that only the processor to which the access right is provided can access the memory. Accordingly, each sub-processor need not check whether the memory is occupied by the other sub-processors. Therefore, processing time necessary for accessing can be saved.

In addition, in Fig. 1, when the access right is provided to either of sub-processors SP1 - SP3 (in this case, the sub-processor to which the access right is provided may or may not access the memory), if the main processor MP outputs a signal to request accessing (which may be for reading use or writing use), the controller (not illustrated) interrupts aforesaid sub-processor to provide the access right based on aforesaid access request signal (when aforesaid sub-processor accesses to the memory, aforesaid access is also interrupted), and controls in such a manner that main processor MP can access the memory (the second invention). Since access the memory by main processor MP has a higher priority compared to that by the sub-processors, the access the memory by main processor MP can interrupt the access by the sub-processor.

When the access the memory by main processor MP is completed, provision of access right restarts. In this occasion, the provision of the access right to the interrupted sub-processor re-starts. (When the interrupted sub-processor accessed to the memory, the access restarts.)

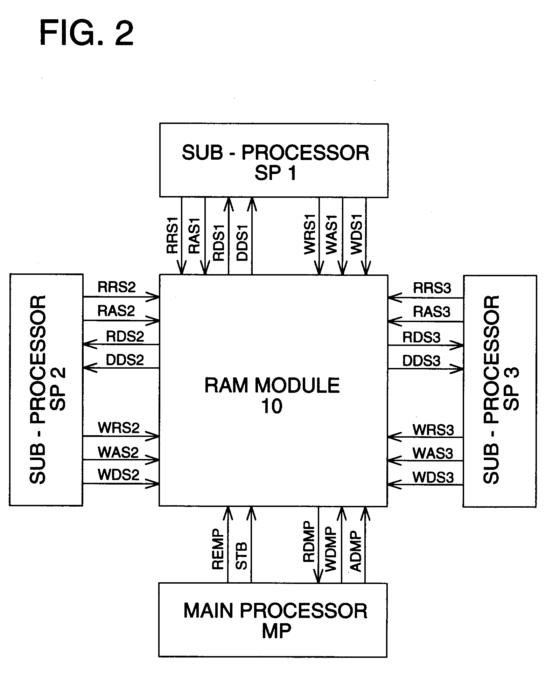

Next, referring to drawings, another example of the present invention will be explained. Fig. 2 shows a communication device applicable to the present invention.

RAM module 10 is a random access memory (RAM) as a memory (a storing means) which stores a prescribed data at a prescribed address or a one-chip gate array loading various circuit for controlling access the memory described later. Aforesaid memory may be RAM, or may be a read only memory (hereinafter, ROM).

Main processor MP is a processor which accesses to the RAM loaded inside RAM module 10 for reading and writing data. The response speed of this main processor MP is higher than for the other processors. Namely, main processor MP has a higher priority.

From or to aforesaid main processor MP, various signals are outputted or inputted (received) in order to receive or send data (reading or writing) from or to the RAM. Namely, a request signal which requests reading or writing data of the RAM, an address signal (an ADMP signal) which designates address of RAM's data and a writing data signal (a WDMP signal) which shows data when aforesaid data is written in a prescribed address are outputted from main processor MP. In addition, a reading data signal (an RDMP signal) which indicates data stored in a prescribed address in the RAM when data for reading is accessed is inputted to main processor MP. Incidentally, as a requesting signal, an REMP signal which indicates either data reading is conducted or data writing is conducted and a strobe signal (an STB signal) which instructs actual timing of accessing to the RAM is outputted from main processor MP.

Sub-processors SP1 - SP3 are processors which access the RAM loaded in RAM module 10 for reading and writing data. The access response speed of aforesaid sub-processors SP1 - SP3 is lower than that of main processor MP. In other words, they are processors having a lower priority. Incidentally, the present Example shows a case when the number of sub-processor is 3. However, the present invention is not limited thereto.

From or to aforesaid sub-processors SP1 - SP3, various signals are outputted or inputted (received) in order to received or send data (reading or writing) from or to the RAM. Namely, a request signal which requests reading or writing data of the RAM, an address signal which designates address of RAM's data and a data signal which outputs or inputs a data signal which is data in a prescribed address. In detail, a requesting signal includes a reading request signal for requesting reading data stored in a prescribed address in the RAM and a writing requesting signal for requesting data stored in a prescribed address in the RAM to write data.

In addition , an address signal includes a reading address signal for designating the address when data in the RAM is read and a writing address signal for designating the address when data is written in the RAM. As the reading address signal, an RAS1 signal is outputted from sub-processor SP1, an RAS2 signal is outputted from sub-processor SP2 and an RAS3 signal is outputted from sub-processor SP3. In addition, as a writing address signal, a WAS1 signal is outputted from sub-processor SP1, a WAS2 signal is outputted from sub-processor SP2, and a WAS3 signal is outputted from sub-processor SP3.

In addition, data signals include data-reading signals which are outputted from the RAM when data stored in a prescribed address in the RAM and writing data signals outputted from each processor when data is written in a prescribed address in the RAM. As a data-reading signal, an RDS1 signal is outputted from sub-processor SP1, an RDS2 signal is outputted from sub-processor SP2 and an RDS3 signal is outputted from sub-processor SP3. In addition, as a writing data signal, a WAS1 signal is outputted from sub-processor SP1, a WDS2 signal is outputted from sub-processor SP2 and a WDS3 signal is outputted from sub-processor SP3.

Incidentally, in the present example, when reading of data from the RAM to each of sub-processor SP1 - SP3 is finished, a data divider (DD) signal for selecting either of sub-processor is outputted. This data divider signal will be explained in detail later.

In addition, in the present Example, main processor MP and sub-processors SP1 - SP3 are processors which respectively can both read and write data. However, processors with only reading or with only writing capability may be used.

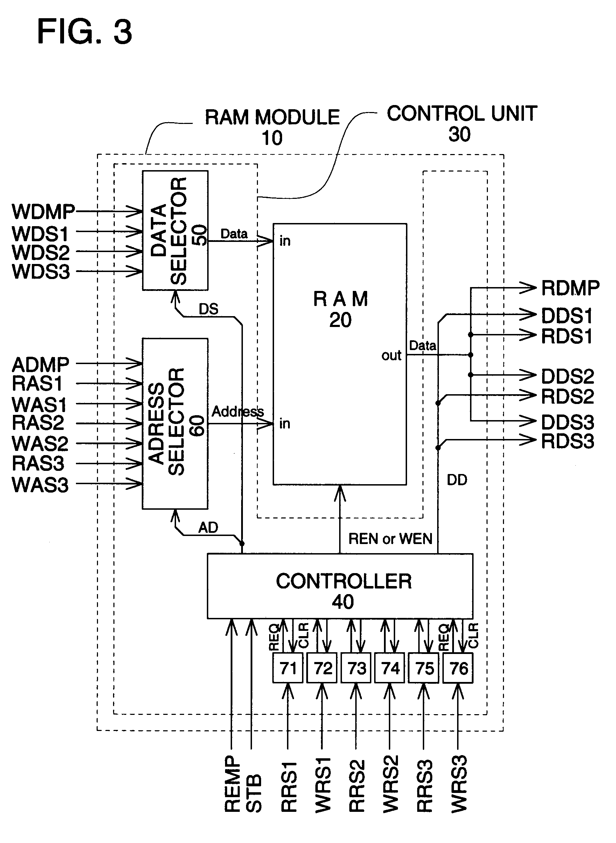

Next, Fig. 3 is a drawing showing inside of RAM module 10 in Fig. 2.

As described above, RAM 20 can read and write data as a memory (a storing means) which stored a prescribed data at a prescribed address.

Control unit (means) 30 is a unit or a means which controls access from each of processor MP and sub-processors SP1 - SP3, and is composed of at least controller 40, data selector 50 as a selection means and address selector 60. This control device is synchronous with a clock having identical standard (not illustrated) and is operated.

Aforesaid controller 40 provides the access right only to one sub-processor among each of sub-processors SP1 - SP3, regardless that, with regard to access by sub-processor SP1 - SP3, each of sub-processors SP1 - SP3 outputs a requesting signal which requests access from sub-processor to the RAM 20 or does not output said. This access right is a right which permits that the processor accesses to the RAM 20. A sub-processor to which the access right is not provided cannot access the RAM 20 though it outputs a requesting signal. The above-mentioned access right is provided to each sub-processor with a prescribed time intervals (for example 400 ns. However, when access request is not outputted, aforesaid time is shortened to 200 ns. In other words, when access right is requested, aforesaid time is extended for accessing) and at a prescribed order. Controller 40 controls in such a manner that all sub-processors are cyclically circulated. Namely, the function of controller 40 is to provide access right exclusively to sub-processors SPS1 - SP3, and to control overall accessing.

In this occasion, it is preferable that requesting signals, address signals and writing data signals outputted from each sub-processor SP1 - SP3 are structured capable of being retained for a period of time until the accessing is completed, i.e., provision of the access right is circulated once in maximum. It goes without saying that the retention of the signal from sub-processors SP1 - SP3 may take any structure such as that each sub-prpcesspr SP1 - SP3 maintains the outputting or RAM module 10 side can retain outputting by means of a buffer or a flag, provided that signals can be maintained.

As described above, due to providing the access right, it is not necessary to provide a program, in each of sub-processors SP1 - SP3, to monitor the access situation of RAM 20. With a simple control, access RAM 20 is realized and the access right can be circulated in a prescribed order (frequency), because accessing can be realized at least once while the access right circulates once so that a long wait for the access right for a long time can be prevented.

In the present Example, reading access right by sub-processor SP1 is provided. Next, the writing access right by sub-processor SP1 is provided. Next, the reading access right by sub-processor SP2 is provided. Next, ----------, writing access right by sub-processor SP3 is provided. Next, it is so circulated that reading access right by sub-processor SP1 is provided. However, it may be so rotated that the reading access right is provided to each of sub-processors, and then, writing access right is provided to each of sub-processors. In addition, in the present Example, all of sub-processors SP1 - SP3 can be provided with one time access right during one circulation. However, the access right may be provided to each of sub-processors with a prescribed order and with frequency having a prescribed regularity. For example, in the following manner, i.e., the reading access right is provided to sub-processor SP1, the writing access right is provided to sub-processor SP1, the reading access right is provided to sub-processor SP2, the writing access right is provided to sub-processor SP2, the reading access right is provided to sub-processor SP1, the writing access right is provided to sub-processor SP1, the reading access right is provided to sub-processor SP3, ---, frequency to provide the access right (number provided during one circulation) is increased to a sub-processor wherein access number of memory is high or high access response speed is requested (in this case, sub-processor SP1) so that the access right may be provided with priority.

In addition, Controller 40 does not include main processor (a processor having a higher priority) MP which is requested to have higher access response time compared to sub-processors SP1 - SP3 in the above-mentioned rotation to provide the access right, and independently controls main processor MP. Namely, controller 40 monitors signals (REMP signals) requested by main processor MP independently from the provision of the access right (or access control) of sub-processors SP1 - SP3.

In this Example, requesting signals (an REMP signal and an STB signal) are inputted to controller 40, and the REMP signal is caused to be monitored. This is why the signal outputted at first when main processor MP tries to access memory 20 is the REMP signal. In order for any sub-processor to receive access from main processor MP immediately, it is necessary to take action as soon as possible. Therefore, the REMP signal which is the first signal sent from main processor MP. Incidentally, when the signal outputted from the main processor MP is not the REMP signal but the ADMP signal, this signal is inputted to address selector 60, is inputted in controller 40 and this ADMP signal can be monitored.

When it is sensed that a requesting signal has been outputted from main processor MP, provision of the access right to sub-processors SP1 - SP3 is interrupted (when the sub-processor accessed to RAM 20, aforesaid access is interrupted), and access of main processor MP to memory 20 is executed. Then. when access by main processor MP is finished, rotation of the access right interrupted twice is re-started (or the execution of the access is re-started). The access right in which the rotation of the access right has been interrupted is provided from the first (when the provision of the access right is interrupted during execution of accessing, accessing is re-started from the first). Namely, controller 40 gives priority to the access by main processor MP, and provide the access right to the main processor. When main processor MP is accessing to RAM 20, it exclusively control access RAM 20 by interrupting provision of the access right to the other processors.

The present Example is so structured that, when request of accessing comes from main processor MP during providing the access right to sub-processors SP1 - SP3, the provision of the access right to aforesaid sub-processor (or access execution by the sub-processor) is interrupted so that access by main processor MP is priorily executed. However, if there is room in access response time by main processor MP, when the sub-processor to which the access right is provided accesses to RAM 20 at a moment main processor requests accessing, the access by main processor MP may be waited (in such a case, a wait signal is outputted to main processor MP so that the REMP signal, the ADMP signal and the WDMP signal are retained) until the access by the sub-processor finishes.

In order to conduct the above-mentioned control, against the access by sub-processors SP1 - SP3, aforesaid controller 40 outputs an access execution (REN or WEN) signal for executing the access based on a request signal from sub-processor SP1, SP2 or SP3 to which the access right is provided to RAM 20. In addition, against the access by main processor MP, controller 40 judges that it is a reading access or writing access exhibited by the REMP signal and then outputs the access execution (REN or WEN) signal to RAM 20 based on the STB signal. Incidentally, if the requesting signal is not outputted from the processor to which the access right is provided, the access execution signal is not outputted.

In addition, in order to conduct the above-mentioned control, controller 40 outputs a DS (data select) signal to data selector 50 described later for controlling in such a manner that a data signal (either of the WDMP signal, the WDS1 signal, the WDS2 signal or the WDS3 signal) corresponding to the processor to which the access right is provided is selected and outputted to RAM 20.

In addition, in order to conduct the above-mentioned control, controller 40 outputs a DS (data select) signal to address selector 60 described later for controlling in such a manner that a address signal (either of the ADMP signal, the RAS1 signal, the WAS2 signal, RAS3 signal or the WAS3 signal) corresponding to the processor to which the access right is provided is selected and outputted to RAM 20.

In addition, in order to conduct the above-mentioned control, controller 40 outputs a CLR (clear) signal for canceling retention of the requesting signals (RRS1 signal, WRS1 signal, RRS2 signal, WRS2 signal, RRS3 signal and WRS3 signal)which are retained in each of flags 71 - 76 when the access is completed to flags 71 - 76 described later.

In addition, in order to conduct the above-mentioned control, controller 40 outputs a DD (data divider) signals (a DDS1 signal to sub-processor SP1, DDS2 signal to sub-processor SP2 and a DDS signal to sub-processor SP3) for controlling in such a manner that data is selectively outputted to the processor which requesting reading to each of sub-processors SP1 - SP3.

Incidentally, the present example is structured to output the DD signal to each of sub-processors SP1 - SP3 so that the DD signal has also a function to each processor that data reading from memory 20 has been completed when reading data. On the contrary, due to providing the data dividor as a part of control unit 30, it is so structured as to divide outputted signals in such a manner that data signals outputted from RAM 20 in accordance with the DD signal is outputted to the processor which requested accessing.

In addition, the present example is so structured that the DS signal and the AS signal are outputted when the requesting signal is outputted from each of sub-processors SP1 - SP3. However, even when the requesting signal is not outputted from each of sub-processors SP1 - SP3, the DS signal and the AS signal can be outputted in synchronizing with the provision of the access right. In this occasion, actual accessing is controlled by the REN signal and the WEN signal. In addition, in this occasion, only main processor MP having higher priority conduct interrupting control. Therefore, only when accessing is requested, the WDMP signal and the ADMP signal of main processor MP are selected.

Based on the DS signal outputted from controller 40, data selector 50 selects one of writing data signals (WDMP signal, WDS1 signal, WDS2 signal and WDS3 signal) outputted from SP1 - SP3 and outputs it to RAM 20.

Based on the AS signal outputted from controller 40, address selector 60 selects one of address signals (ADMP signal, WAS1 signal, RAS2 signal, WDS2 signal, RAS2 signal, WDS3 signal and RAS3 signal) which designates the address of data written to or read from RAM20 outputted from SP1 - SP3 and outputs it to RAM 20.

Flags 71 - 76 senses the change of requesting signals (RRS1 signal, WRS1 signal, RRS2 signal, WRS2 signal, RRS3 signal and WRS3 signal) outputted from each of sub-processors SP1 - SP3, outputs a requesting signal (REQ signal) to controller 40 (retains the requesting signal) and is cleared based on the CLR signal, which corresponds to the accessing request by the relevant sub-processor, which informs that access from the controller 40 is completed for releasing the retention. In other words, an access-requesting signal is retained (extended) until the accessing is completed. The REQ signal outputted from each flag 71 - 76 has the same meaning as the requesting signal outputted from each sub-processors SP1 - SP3, namely a requesting signal which requests data reading and writing by RAM 20. Due to a function of the above-mentioned flags 71 - 76 that a requesting signal is retained and it is cleared at a point when the accessing is completed, even if the access is interrupted by main processor MP, aforesaid requesting signal can be extended.

In the present example, flags 71 - 76 are provided on control unit 30. However, they may be provided on each of sub-processors SP1 - SP3. In addition, if it is structured that the outputting of the outputting signal from each of processors SP1 - SP3 is retained for a prescribed time (at least, for a period of time until accessing is completed), the above-mentioned flags 71 - 76 can be omitted. In addition, in the present example, a flag is not provided for main processor MP. The reason for this is that execution of the access by main processor MP is not caused to wait and it immediately accesses.

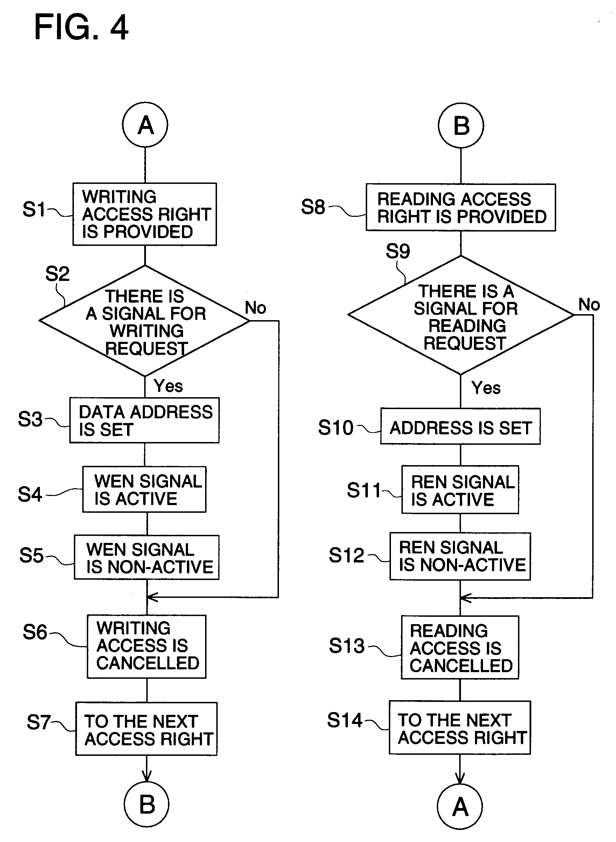

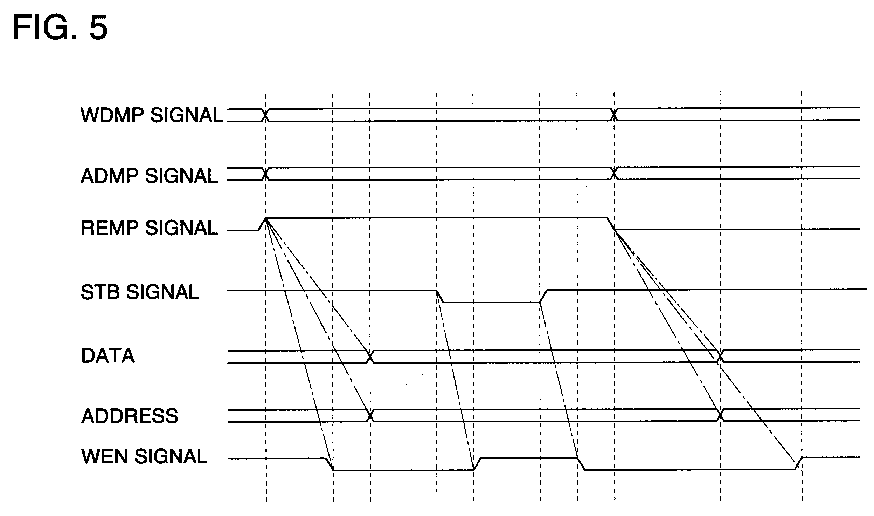

Operation of the present example will be explained referring to drawings. Incidentally, Fig. 4 is a flow chart showing provision of the access right to sub-processors SP1 - SP3, and Fig. 5 is a timing chart showing interruption of main processor MP.

When the necessity to access from each of sub-processors SP1 - SP3 to RAM 20 occurs, a requesting signal (an RRS1 signal, a WRS1 signal, an RRS2 signal, a WRS2 signal, an RRS3 signal and a WRS3 signal) is outputted (incidentally, when there is no necessity to access from each of sub-processors SP1 - SP3 to RAM 20, the requesting signal is not outputted). The requesting signal is temporarily retained in flags 71 - 76, and from aforesaid flag, an REQ signal corresponding to each sub-processor is outputted as a requesting signal from each of sub-processors SP1 - SP3 (in this occasion, there is a writing requesting signal and a reading requesting signal). The REQ signal retained in flags 71 - 76 is canceled by the CLR signal, which represents the completion of accessing, outputted by controller 40.

Regardless that the REQ signal is outputted from each of sub-processors SP1 - SP3 through flags 71 - 76, controller 40 provides the access right to sub-processor SP1 (writing access right), sub-processor SP1 (reading access right), sub-processor SP2 (writing access right), ---, sub-processor SP3 (reading access right) with a prescribed order, with frequency having a prescribed regularity and with a prescribed interval. When provision of the reading access right to the final sub-processor SP3 is finished, the access right is cyclically provided to first sub-processor SP1 (writing access right) (rotation). The access right is so controlled to be always given only to one controller.

In the present example, sub-processors SP1 - SP3 are reading and writing combination processors. Therefore, when providing the access right to one processor, one access right is provided to a circuit for reading and a circuit for writing respectively in aforesaid reading and writing combination processors. However, when a sub-processor is a reading-exclusive processor or a writing-exclusive processor, one access right is provided to one sub-processor. Further, when a sub-processor is a reading and writing combination processors as in the present example, the access right may be provided to aforesaid processor itself, and after confirming whether there is a reading request, there is a writing request or there are both or there are not either of them, reading access or writing access requested may be conducted. In such an occasion, when the REQ signal from a sub-processor to which the access right is provided is outputted through flags 71 - 76, accessing to RAM 20 is conducted depending upon the REQ signal retained. Namely, if it is a REQ signal for writing, writing processing to RAM 20 is conducted to a sub-processor to which the REQ signal is outputted, and if it is a REQ signal for reading, reading processing to RAM 20 is conducted to a sub-processor to which the REQ signal is outputted. Distinction between writing or reading may be defined in accordance with the REQ signal when providing the access right in advance.

Next, operation when controller 40 provides the access right to sub-processor will now be explained referring to Figs. 3 and 4.

According to a pre-determined order, controller 40 provides an access right for writing by sub-processor SP1 to a data sending/receiving circuit on a writing side of sub-processor SP1 (S1). It is checked whether the REQ signal from flag 72 which corresponds to the WRS1 signal which is a writing-requesting signal is outputted from the data sending/receiving circuit on writing side of sub-processor SP1 and retained (S2). If the REQ signal is not outputted, the writing access right in S6 is canceled (in this occasion, S3 - S5 are canceled. Therefore, time for providing the access right is shortened. From other viewpoint, if the REQ signal is outputted, time for providing the access right is extended.). If the REQ signal is outputted from flag 72 and retained, controller 40 outputs the DS signal which selects the WDS1 signal corresponding to sub-processor SP1 is outputted to data selector 50. According to the DS signal, data selector 50 outputs the WDS1 signal which corresponds to sub-processor SP1 from writing-data signal from each of processor MP and SP1 - SP3 inputted to data selector 50 for setting data. In addition, concurrently with setting aforesaid data, controller 40 outputs an AS signal which selects the WAS1 signal corresponding to sub-processor SP1. According to an AS signal, address selector 60 outputs the WAS1 signal which corresponds to sub-processor SP1 from among address signals from SP1 - SP3 for setting the address (S3).

Controller 40 causes the WEN signal for writing to be active (S4). Based on the WEN signal which comes to be active, RAM 20 write data shown by the WDS1 signal in an address exhibited by the set WAS1 signal. Controller 40 causes the WEN signal to be non-active when a pre-determined data writing time is finished (S5). Controller 40 out puts the CLR signal to flag 72 for clearing the REQ signal retained by flag 72 when writing is finished. Controller 40 cancels provision of the access right for writing by sub-processor SP1 to the data sending/receiving circuit on writing side of sub-processor SP1 (S6). Then, next access right pre-determined is provided (S7). In this example, the next access right is determined to be the access right for reading by sub-processor SP1.

Controller 40 which ash canceled the previous writing access right provides reading access right of sub-processor SP1, as the next access right, to the data sending/receiving circuit of sub-processor SP1 (S8). It is checked whether the REQ signal from flag 71 which corresponds to the RRS1 signal which is a reading-requesting signal is outputted from the data sending/receiving circuit on reading side of sub-processor SP1 and retained (S9). If the REQ signal is not outputted, the reading access right in S13 is canceled (in this occasion, S10 - S12 are canceled. Therefore, time for providing the access right is shortened. From other viewpoint, if the REQ signal is outputted, time for providing the access right is extended.). If the REQ signal is outputted from flag 71 and retained, controller 40 outputs the AS signal which selects the RAS1 signal corresponding to sub-processor SP1 is outputted to address selector 60. According to the AS signal, address selector 60 outputs the RAS1 signal which corresponds to sub-processor SP1 from address signal from each of processor MP and SP1 - SP3 inputted to address selector 60 for setting data (S10).

Controller 40 causes the REN signal for reading to be active (S11). Based on the REN signal which comes to be active, RAM 20 outputs data stored in an address exhibited by the set RAS1 signal. When a pre-determined data reading time is finished, controller 40 outputs the DD signal (namely, the DDS1 signal) which shows that the data signal outputted from RAM 20 is a signal from sub-processor SP1. Based on aforesaid DDS1 signal, sub-processor SP1 counsels that data reading of RAM 20 is completed and reads data (the RDS1 signal) outputted from RAM 20. On the other hand, Controller 40 causes the REN signal to be non-active after passing a prescribed time after outputting the DD signal. At this time, Controller 40 out puts the CLR signal to flag 72 for clearing the REQ signal retained by flag 72 when writing is finished. Controller 40 cancels provision of the access right for writing by sub-processor SP1 to the data sending/receiving circuit on writing side of sub-processor SP1 (S6). Then, next access right pre-determined is provided (S7). In this example, the next access right is determined to be the access right for reading by sub-processor SP1. Controller 40 out puts the CLR signal to flag 71 for clearing the REQ signal retained by flag 71. Controller 40 cancels provision of the access right for reading by sub-processor SP1 to the data sending/receiving circuit on reading side of sub-processor SP1 (S13). Then, next access right pre-determined is provided (S14). In this example, the next access right is determined to be the access right for writing by sub-processor SP2. Provision of the above-mentioned access right, in detail, reading access right and writing access right are provided with a prescribed order and with frequency having a prescribed regularity.

Incidentally, in a flow chart for providing the access right as shown in Fig. 4, after checking the requesting signal (S2 and S9), if the requesting signal is outputted, address setting or address and data setting is conducted (S3 and S10). If the requesting signal is not outputted, by canceling the access right (S6 and S13), time for providing the access right can specifically be reduced if there is no requesting signal. Not limiting thereto, concurrently with provision of the access right (S2 and S9) or after that, data and address setting is conducted (S3 and S10). Following this, the requesting signal may be checked (S2 and S9). In this occasion, it is beneficial for keeping setting-up time when accessing.

Next, operation when access is requested from main processor MP during aforesaid rotation (provision of the access right) will now be explained referring to Figs. 3 and 5. Incidentally, Fig. 5 shows timing chart showing interruption of writing access by main processor MP.

First, when main processor MP conducts writing access RAM 20, a REMP signal which shows whether data writing is conducted or data reading is conducted, an ADMP signal which shows address and, if data writing is conducted, a WDMP signal showing writing data are outputted. Since Fig. 5 is a timing chart which shows interruption of writing address, the REMP signal and the ADMP signal are outputted. Hereinafter, this writing access will be explained.

Among the REMP signal, the ADMP signal and the WDMP signal which are signals outputted firstly from main processor MP, controller 40 always monitors the change of the REMP signal. If controller 40 senses the change of the REMP signal, it interrupts provision of the access right to sub-processors SP1 - SP3. When sub-processors SP1 - SP3 accesses to the memory (when controller 40 outputs the WEN signal or the REN signal to RAM 20), access is interrupted. Fig. 5 shows a case when the WEN signal is outputted by controller 40, this WEN signal is caused to be low.

Delaying due to this interruption, controller 40 outputs the DS signal and the AS signal in such a manner that the SDMP signal and the WDMP signal from main processor MP outputs the ADMP signal and the WDMP signal to RAM 20 for setting data and address. In Fig. 5, data, address and what is described show timing of the signal outputted from data selector 50 and address selector 60.

Following this, an STB (strobe) signal for instruction access execution to RAM 20 actually is outputted from main processor MP. In Fig. 5, by that the STB signal is "low", access execution is instructed. Based on this STB signal, controller 40 outputs the REN signal or the WEN signal which are correspondent to reading access or writing access RAM 20 by means of the REMP signal. In Fig. 5, the REMP signal shows writing access ("high" status). Therefore, controller 40 outputs the WEN signal which is a writing access executing signal. RAM 20 receiving this output conducts writing processing of data which was outputted from data selector 50 in an address outputted from address selector 60.

A prescribed time is necessary for keeping setting up time and the hold time since interruption of the provision of the access right or interruption of the access until data and address are set, and since data and address are set until the WEN signal is outputted. In order to provide the above-mentioned prescribed time, the present example utilizes delay time by means of an inside element in controller 40 so that timing to output the DS signal, the AS signal, the WEN signal and the REN signal are outputted from the controller 40. Based on the change (from "high" status to "low" status) of the STB signal outputted from main processor MP, writing processing is completed due to the stop ("low") of the WEN signal from controller 40.

Based on the change of the REMP signal to "low" by main processor MP, signals outputted from data selector 50 and address selector 60 are defaulted. When defaulting, controller 40 outputs an AS signal and, in addition, a DS signal in order to output address signals which correspond to the sub-processor which was accessed to RAM 20 and, in the case of writing, output data signals to RAM 20 before main processor MP interrupts the access. Slightly delaying to this default, controller 40 outputs the REN signal or the WEN signal which instructs access execution conducted before the interruption access. In addition, in the case when the sub-processor did not access prior to the access, the sub-processor which was interrupted the provision of the access right re-starts.

As described above, access by main processor MP is conducted based on signals from main processor MP. Namely, access by main processor MP is basically conducted based on operation clock of main processor MP, while only utilizing delay time of inside elements in control unit 30 of controller 40. On the other hand, access by sub-processors SP1 - SP3 to which the access right is provided to RAM 20 is conducted based on the operation clock by the control apparatus, by setting outputting time of flags 71 - 76 and sub-processors SP1 - SP3 longer in advance. Due to this, access by main processor MP to RAM 20 is ranked as the most priority so that the access response time can be enhanced as much as possible.

Incidentally, the present example is so structured that data is exchanged between RAM module 10 and each processor MP and SP1 - SP3 by means of a parallel signal. However, it goes without saying that data may be exchanged between RAM module 10 and each processor MP and SP1 - SP3 by means of a serial signal by providing a serial - parallel converter.

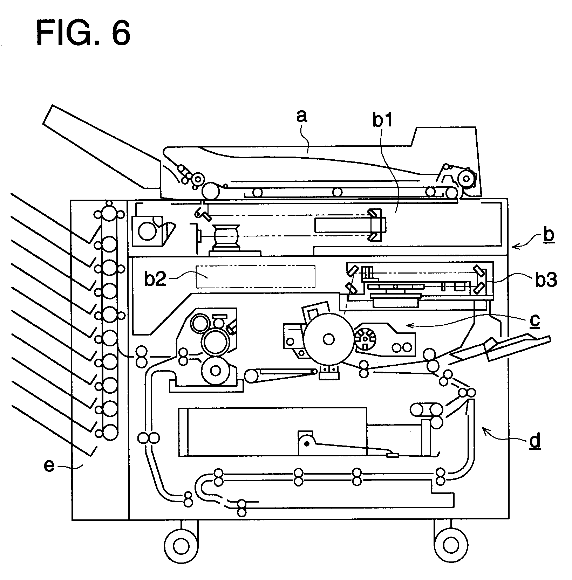

Next, an example wherein the present invention is applied to a copying apparatus which is an image forming apparatus will now be explained. Prior to this, based on Fig. 6 which is a cross-sectional block diagram of a copying apparatus, constitution of the copying apparatus and process will now be explained. Incidentally, since this constitution and process are known matter, only simple explanation will be provided.

Above the image forming apparatus main body, automatic original conveyance means a is located. Automatic original conveyance means a take up an original from originals loaded above one by one, and convey it onto a platen glass which reads an original image, and then discharge it. In addition, aforesaid automatic original conveyance means a can reverse a surface of the original to automatically convey onto the platen glass. Optical system b is composed of reading means b1, image processing means b2 and exposure means b3. Reading means b1 is composed of a light source, moving mirrors and light-receiving elements such as an image-forming lens and a CCD. Reading means b1 scans an original located on an exposure position on the platen glass, and reads image information of the original with the light-receiving element on the image-formation position. Image processing means b2 converts and processes image information read by reading means b1 to recording signals suitable for exposure by means of exposure means b3. Exposure means b3 forms a latent image by conducting optical scanning on a photoreceptor drum which is rotating, based on recording signals converted and processed by means of image processing means b2. Image forming means c is composed of the photoreceptor drum and chargers, developers, transfer devices and separation devices which are provided on the circumferential portion of the photoreceptor drum. Image forming means c forms a toner image on the photoreceptor drum, conducts transfer on a recording medium conveyed separately, separates the transfer medium wherein the toner image has been transferred and fixes the toner image with a fixing device. Recording medium conveyance means d conveys the recording medium housed in a paper feeding section in synchronizing with image forming means c, and then, conveys it to outside of the image forming apparatus. Incidentally, in the case of double-sided copying, after reversing the recording medium wherein the toner image has been fixed on one side into an automatic reversing section, aforesaid recording medium is conveyed in svnchronizing with image forming means c again, and then, is conveyed to outside of the image forming apparatus. Sorter e sorts the recording media conveyed to outside the image forming apparatus.

In addition, the copying apparatus is provided with various functions for maintaining a remote diagnosis function which diagnosis the copying apparatus by a telephone line connected, a memory card function which counts copy number and memorizes it in a memory card and a weekly time function which controls on-off of the power supply according to weekly date or time.

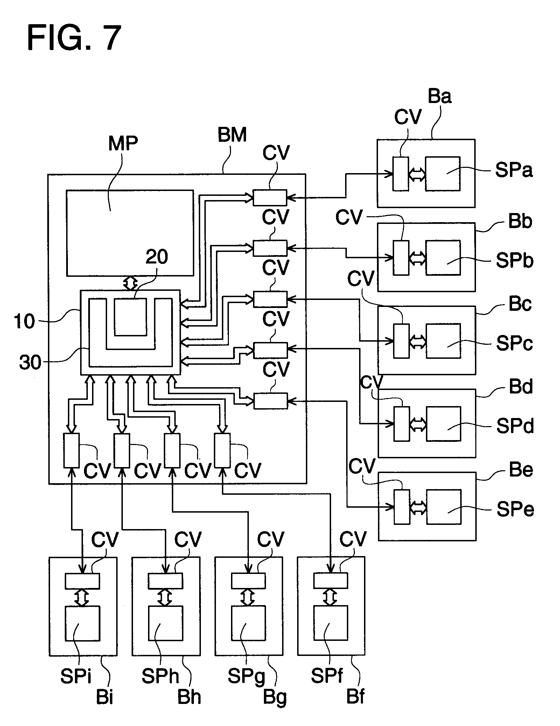

In the above-mentioned copying apparatus, plural processors are used for conducting various control. Fig. 7 shows one example of plural processors and their connection. Processors include main processor MP which controls image formation sequence and the entire copying apparatus (control of each processors), sub-processor(s) which is necessary for forming the above-mentioned image formation and which serves for forming an image during image formation process and sub-processor(s) which is necessary for the maintenance of the copying apparatus. Sub-processor(s) necessary for image formation include sub-processor SPa which controls automatic original conveyance device a, sub-processor SPb which controls optical system b, sub-processor SPc which controls high voltage power supply of image forming means c, sub-processor SPd which controls recording medium conveyance means, sub-processor SPe which controls sorter means e and sub-processor SPf (not illustrated) which controls the operation panel. Sub-processors necessary for maintenance include sub-processor SPg which controls the remote diagnosis function, sub-processor SPh which controls the memory card function and sub-processor SPi which controls the weekly timer function. The above-mentioned plural sub-processors SPa - SPi and main processor MP are located respectively on boards Ba - Bi and board BM.

Incidentally, sub-processor SPf which controls the operation panel was categorized in sub-processors necessary for forming an image in the present example since it displays image formation status on the operation panel. However, it may be categorized in sub-processors necessary for maintenance. In addition, main processor may control the operation panel. In addition, in the present example, the above-mentioned various processors were illustrated. However, not limiting thereto, it goes without saying that one processor functions two or more processors.

Between board BM loading RAM module 10 and boards Ba - Bi respectively loading plural sub-processors SPa - SPi may be electrically connected by means of the parallel signal. However, electrical connection by means of the serial signal as in the present example reduces the numbers of signal lines and connectors so that low cost can be realized. In this occasion, by providing a parallel - serial converter CV which converts the parallel signal and the serial signal on each of boards Ba - Bi and board MP, serial signal is electrically connected between main processor MP, board BM loading RAM 10 module 10 and boards Ba - Bi which respectively load plural sub-processors SPa - SPi.

It is necessary to share data and exchange data (so-called communication) between main processor MP and plural sub-processors SPa - SPi and between each of plural sub-processors SPa - SPi. Accordingly, the above-mentioned RAM module 10 is loaded on board BM which loads main processor. Through memory (also referred to as "RAM") 20 provided on the above-mentioned RAM module 10, communication is conducted between each of processors MP and SPa - SPi or data is shared between them. Access the above-mentioned memory 20 is conducted by the above-mentioned control apparatus 30.

Control apparatus 30 on RAM module 10, as described in the above-mentioned first invention, provides the access right which enables to access the memory to a specific number (in the present example, one) of sub-processor among each of sub-processors SPa - SPi, regardless that the sub-processor requests accessing to RAM 20 which is a memory loaded on RAM module 10. Access right is provided with a prescribed order, with a prescribed interval and cyclically such as provision of the access right to sub-processor SPa, provision of the access right to sub-processor SPb, provision of the access right to sub-processor SPc, ---. Only a sub-processor which is provided with the access right can access the memory. Therefore, it is not necessary to check whether the other sub-processor is accessing prior to the access by each sub-processor. Accordingly, control of each sub-processor can be simplified.

When main processor MP tries to access RAM 20, control apparatus 30 , as described in the above-mentioned second invention, interrupts provision of the access right to the sub-processor and causes main processor to access RAM 20. When access by main processor MP is finished, provision of the access right from the interrupted sub-processor is re-started. Accordingly, even if the other processor is accessing, the processor having higher priority can access without waiting possibly.

The above-mentioned constitution and control about provision or interruption of the detailed access right are the same as shown in Figs. 3 - 5. Therefore, explanation is omitted.

Incidentally, main processor MP and all of sub-processors SPa - SPi may be provided with the access right (only the first invention) without causing main processor MP to interrupt. However, in such an occasion, since priority of main processor MP is high, it is preferable to give it the access frequency most frequently. For example, the access right is provided in such a manner that provision of the access right to main processor MP, provision of the access right to sub-processor SPa, provision of the access right to main processor MP, provision of the access right to sub-processor SPb, ---.

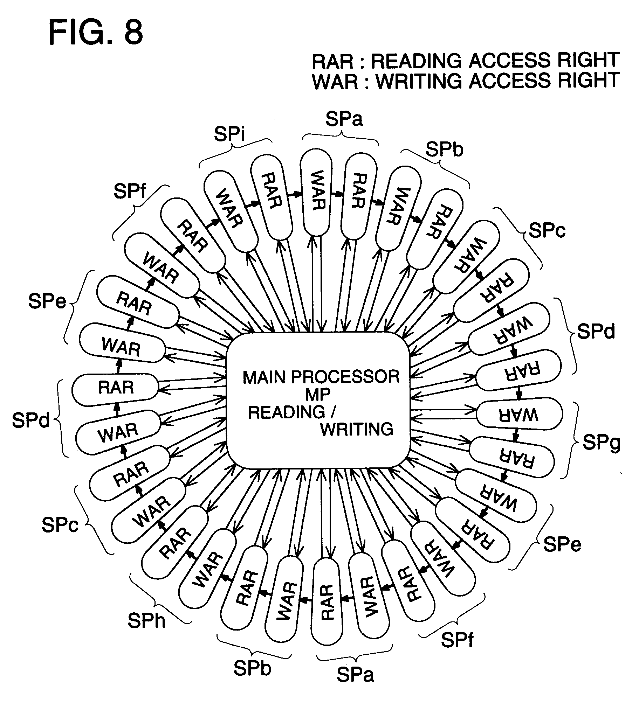

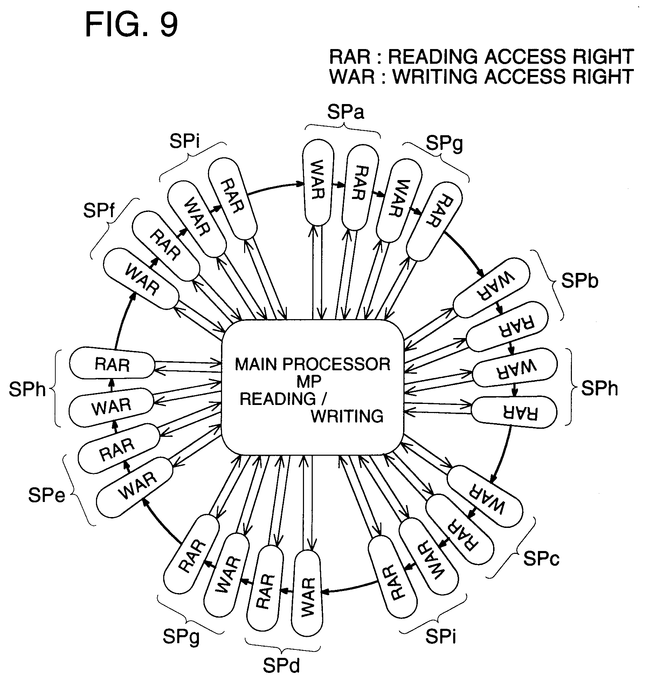

Next, Figs. 8 and 9 which illustrate preferable provision of the access right intrinsic to the above-mentioned image forming apparatus identical to Fig. 1. Fig. 8 is a block diagram showing schematically provision of the access right when the image forming apparatus is forming an image. Fig. 9 is a block diagram showing schematically provision of the access right when the image forming apparatus is not forming an image.

In the case of the image forming apparatus, necessity of the access by the above-mentioned sub-processors SPa - SPi change depending upon the status of the image forming apparatus, for example when an image is being formed or when an image is not being formed. Accordingly, the present example can promptly write and read necessary data by changing frequency (number of time provided during one circulation) to provide the access right to each of sub-processors by controller 30 according to the status of the image forming apparatus, resulting in no adverse affect to image formation.

More practically, when an image is formed, it is necessary that sub-processors SPa - SPf which are necessary for image forming frequently access the memory. Therefore, for the purpose that sub-processors SPa - SPf which are necessary for image forming frequently access the memory by means of controller 30, it is so controlled that frequency to provide the access right to sub-processors SPa - SPf which are necessary for image forming is larger than the frequency to provide the access right to sub-processors SPg - SPi which are necessary for maintenance. As one example thereof, as shown by a bold arrow in Fig. 8, provision of writing access right to sub-processor SPa, provision of reading access right to sub-processor SPa, provision of writing access right to sub-processor SPb, provision of reading access right to sub-processor SPb, ---, provision of writing access right to sub-processor SPd, provision of reading access right to sub-processor SPd, provision of writing access right to sub-processor SPg, provision of reading access right to sub-processor SPg, provision of writing access right to sub-processor SPe, provision of reading access right to sub-processor SPe, ---, provision of writing access right to sub-processor SPi, provision of reading access right to sub-processor SPi, ---. As described above, while access right is provided to sub-processors SPa - SPf twice (combination of writing and reading is counted as once) during one circulation, access right is provided to sub-processors SPg - SPi which are necessary for maintenance once.

Incidentally, in the above-mentioned example, during an image is formed, sub-processors SPa - SPf which are necessary for image formation were treated uniformly (i.e., the access right was provided twice to all of them during one circulation). However, frequency of provision of the access right to sub-processor SPb which controls optical system b and to sub-processor SPd which controls recording medium conveyance means d. In addition, with regard to so-called option type sub-processors such as sub-processor SPa which controls automatic original conveyance apparatus a and sub-processor SPe which controls sorter means e which may not be used depending upon setting by the customer, frequency of providing the access right may be reduced or reduced to zero if they are not used due to setting by the customer. In addition, even during image formation, the image forming apparatus has various processes such as original conveyance, image reading, image formation on the photoreceptor drum and recording medium conveyance and paper discharging. Therefore, depending upon the process status of the image forming apparatus, frequency of providing the access right may be changed.

On the other hand, during an image is not formed (i.e, so-called stand-by position), it is less necessary for sub-processors SPa - SPf necessary for image formation to access the memory. On the contrary, It becomes more necessary for SPg - SPi necessary for maintenance to access the memory. Accordingly, it is so controlled by control apparatus 30 which controls provision of the access right that frequency to provide sub-processors SSPg - SPi necessary for maintenance with the access right more frequently than frequency to provide sub-processors SSPa - SPf necessary for maintenance with the access right. As one example thereof, as shown by a bold arrow in Fig. 9, the access right is provided to sub-processors SPa - SPf necessary for image formation once while the access right is provided to sub-processors SPg - SPi necessary for maintenance twice (combination of writing and reading is counted as once) in such a manner that provision of writing access right to sub-processor SPa, provision of reading access right to sub-processor SPa, provision of writing access right to sub-processor SPg, provision of reading access right to sub-processor SPg, provision of writing access right to sub-processor SPb, provision of reading access right to sub-processor SPb, provision of writing access right to sub-processor SPa, provision of reading access right to sub-processor SPh, ---, provision of writing access right to sub-processor SPf, provision of reading access right to sub-processor SPf, provision of writing access right to sub-processor SPi, provision of reading access right to sub-processor SPi, ---.

Incidentally, in Figs. 8 and 9, when main processor MP tries to access the memory, as described in the above-mentioned second invention, controller apparatus 30 interrupts provision of the access right to sub-processor, causes main processor MP to access the memory and provision of the access right to sub-processor-starts when access by main processor MP is finished. Therefore, a processor having a higher priority can access the memory without waiting as possible even when the other processor is accessing.

In addition, controller apparatus 30 may provide the access right to main processor MP and sub-processors SPa - SPi while not cause main processor interrupts (only the first invention). In this occasion, since priority of main processor is high, it is preferable to increase the access frequency of main processor mostly. For example, as shown in thin arrows in Figs. 8 and 9, every time the access right is provided to either of sub-processors SPa - SPi, the access right is provided to main processor MP.

In the above-mentioned explanation, the explanation was made about cases when only one access can be conducted to the memory concurrently. However, the present invention can be applicable to cases when plural access can be conducted to the memory (for example, two dual port RAM). In this occasion, the access right can be provided to specific number of sub-processors whose number is the same or smaller than that the memory has for receiving accessing. For example, in the case of a memory wherein two access can be conducted thereto, by providing two access right to plural sub-processors, more speedy access becomes possible. Or, by providing one access right to plural sub-processors, the main processor may access constantly without interrupting accessing by the sub-processors.

As described above, the first invention provides the access right regardless that whether a processor request accessing. Therefore, it is not necessary to check whether the other processors is access prior to accessing by aforesaid processor. Accordingly, control of each processor can be simplified.

The second invention allows a processor having higher priority to access without waiting as possible even when the other processor is accessing.

## Claims

1. An image forming apparatus for forming an image on a sheet, comprising:
a memory for storing data in predetermined addresses;
a plurality of processors;
access control means for providing an access right to get access to the memory for a predetermined number of processors among the plurality of processors in accordance with predetermined order so that only the processor provided with the access right can get access to the memory.

2. The image forming apparatus of claim 1, wherein the access right is provided cyclically in accordance with the predetermined order.

3. The image forming apparatus of claim 1, wherein the predetermined number is a number of processors capable of simultaneously getting access to the memory.

4. The image forming apparatus of claim 1, wherein the access control means changes frequency to provide the access right for each processor in accordance with a condition of the image forming apparatus.

5. The image forming apparatus of claim 1, wherein the plurality of processors includes a processor to control a load in the image forming apparatus.

6. The image forming apparatus of claim 5, wherein the load includes at least one of an automatic document feeder, a optical system, a high voltage power source, a sheet conveying means, a soater means, and an operation panel.

7. The image forming apparatus of claim 5, wherein the plurality of processors includes a processor for maintenance for the image forming apparatus.

8. The image forming apparatus of claim 7, wherein the access control means make the frequency to provide the access right for the processor to control the load more than the frequency for the processor for the maintenance while the image forming apparatus forms an image.

9. The image forming apparatus of claim 7, wherein the access control means make the frequency to provide the access right for the processor to control the load fewer than the frequency for the processor for the maintenance when the image forming apparatus dose not form an image.

10. The image forming apparatus of claim 1, wherein the plurality of processors includes a processor for maintenance for the image forming apparatus.

11. The image forming apparatus of claim 1, wherein the plurality of processors includes a processor to control a memory card or a timer.

12. The image forming apparatus of claim 1, further comprising a main processor to control the plurality of processors, wherein when the main processor requests the access right while the predetermined number of processors among the plurality of processors are getting access to the memory, the access control means suspends to provide the access right for the predetermined number of processors and provides the access right for the main processor.

13. The image forming apparatus of claim 1, further comprising a main processor to conduct a sequence control for forming an image, wherein the access control make the frequency to provide the access right for the main process the most.

14. The image forming apparatus of claim 1, wherein each of the plurality of processors and the access control means comprise a converter to convert a parallel signal and a serial signal on a board and communicate with the serial signal among the boards.

15. A memory access system for providing a plurality of processors with access to a single memory, comprising:
the memory for storing data in predetermined addresses;
a plurality of processors;
access control means for providing an access right to get access to the memory for a predetermined number of processors among the plurality of processors in accordance with predetermined order so that only the processor provided with the access right can get access to the memory.

16. The memory access system of claim 15, wherein the access right is provided cyclically in accordance with the predetermined order.

17. The memory access system of claim 15, wherein the predetermined number is a number of processors capable of simultaneously getting access to the memory.

18. The memory access system of claim 15, wherein in order to get access to data stored in the memory, the access control means comprises an address selector to select an address signal outputted from a processor provided with the access right to the memory.

19. The memory access system of claim 15, wherein in order to store data in the memory, the access control means comprises a data selector to select a data signal outputted from a processor provided with the access right.

20. The memory access system of claim 15, wherein in order to selectively output data to a processor provided with the access right, the access control means comprises a data divider.

21. The memory access system of claim 15, wherein the provision of the access right is changed with a given interval.

22. The memory access system of claim 15, wherein when the plurality of processors request to get access to the memory, the plurality of processors output a access request signal to the access control means, and the access control means retains the access request signal until the access has been completed.

23. The memory access system of claim 15, wherein when the processor provided with the access right does not request the access right, the access control means shortens a time period during which the processor is provided with the access time.

24. The memory access system of claim 15, wherein priority order are predetermined for the plurality of processors.

25. The memory access system of claim 24, wherein when a processor having a high priority requests the access right while the predetermined number of processors are getting access to the memory, the access control means suspends to provide the access right for the processor and provides the access right for the processor having a high priority.

26. The memory access system of claim 25, wherein when the processor having a high priority has completed to get access to the memory, the access control means provides again the access right for the processor whose access right was suspended.

27. The memory access system of claim 25, wherein the access control means retains the access right of the processor whose access right was suspended.

28. The memory access system of claim 15, further comprising a main processor to control the plurality of processors, wherein when the main processor requests the access right while the predetermined number of processors among the plurality of processors are getting access to the memory, the access control means suspends to provide the access right for the predetermined number of processors and provides the access right for the main processor.

29. The memory access system of claim 28, wherein the main processor is provided with the access right independently of the plurality of processors provided the access right cyclically.

30. The memory access system of claim 28, wherein the main process gets access based on its action clock and the plurality of processors get access based on an action clock of the access control means.

31. The memory access system of claim 15, further comprising a main processor to control the plurality of processors, wherein when the main processor requests the access right while the predetermined number of processors among the plurality of processors are getting access to the memory, the access control means retains the access request of the main processor and when the predetermined number of processors has completed to get access to the memory, the access control means provides the access right for the main processor in accordance with the retained access request.

32. The memory access system of claim 31, wherein the main processor is provided with the access right independently of the plurality of processors provided the access right cyclically.

33. The memory access system of claim 31, wherein the main process gets access based on its action clock and the plurality of processors get access based on an action clock of the access control means.

34. An access control device to control data access between a plurality of processors and a single memory, comprising:
access control means for providing an access right to get access to the memory for a predetermined number of processors among the plurality of processors in accordance with predetermined order so that only the processor provided with the access right can get access to the memory.

35. The access control device of claim 34, wherein the access right is provided cyclically in accordance with the predetermined order.

36. The access control device of claim 34, wherein the predetermined number is a number of processors capable of simultaneously getting access to the memory.

37. The access control device of claim 34, wherein priority order are predetermined for the plurality of processors.

38. The access control device of claim 34, wherein when a processor having a high priority requests the access right while the predetermined number of processors are getting access to the memory, the access control means suspends to provide the access right for the processor and provides the access right for the processor having a high priority.

39. The access control device of claim 34, wherein in order to get access to data stored in the memory, the access control means comprises an address selector to select an address signal outputted from a processor provided with the access right to the memory.

40. The access control device of claim 34, wherein in order to store data in the memory, the access control means comprises a data selector to select a data signal outputted from a processor provided with the access right.

41. The access control device of claim 34, wherein in order to selectively output data to a processor provided with the access right, the access control means comprises a data divider.
